# EUROPÄISCHE PATENTSCHRIFT

(11) **EP 2 248 021 B1**
(45) Veröffentlichungstag und Bekanntmachung des Hinweises auf die Patenterteilung: **03.08.2011**
(21) Anmeldenummer: 08872594.0
(22) Anmeldetag: 27.11.2008
(51) Int. Cl.: G06F 11/07, G06F 11/36

(54) **ANORDNUNG ZUR ÜBERPRÜFUNG EINES PROGRAMMSPEICHERS EINER RECHENEINHEIT**
ARRANGEMENT FOR CHECKING A PROGRAM MEMORY IN A COMPUTATION UNIT
SYSTEME POUR CONTROLER UNE MEMOIRE PROGRAMME D'UNE UNITE DE CALCUL

(30) Priorität: 21.02.2008 DE 102008010233
(43) Veröffentlichungstag der Anmeldung: 10.11.2010
(73) Patentinhaber: Robert Bosch GmbH, 70442 Stuttgart (DE)
(72) Erfinder: PLETINCKX, Jo, 71723 Grossbottwar (DE); WANG, Hongyu, 70563 Stuttgart (DE); WENZLER, Axel, 71229 Leonberg (DE); BROCKMANN, Markus, 72074 Tuebingen (DE)
(86) Internationale Anmeldenummer: PCT/EP2008/066325
(87) Internationale Veröffentlichungsnummer: WO 2009/103372

(56) Entgegenhaltungen:
- EP-A- 0 843 317
- EP-A- 1 178 321
- WO-A-03/043022
- DE-A1- 2 906 117

## Beschreibung

Die Erfindung betrifft eine Anordnung zur Überprüfung eines Programmspeichers einer Recheneinheit mit einem Überprüfungsmodul, wobei die Recheneinheit aus einem mit dem Programmspeicher verbundenen Befehlszähler besteht, welcher ein Register aufweist und das Register mit einem den Registerinhalt setzenden ersten Umschalter verbunden ist.

Die Anzahl der sicherheitskritischen Anwendungen im kraftfahrzeugtechnischen Bereich wächst ständig. Gleichzeitig steigen auch die Komplexität sowie die Sicherheitsanforderungen an die in der Kraftfahrzeugtechnik eingesetzten Schaltkreise. Dies trifft vor allem auch auf die hardewarespezifischen Schaltkreise (ASIC) zu. Dabei vermehren sich die Forderungen nach Überprüfung der sicherheitsrelevanten Bauelemente. So müssen auch die Programmcodes, welche in einem Schaltkreis integriert oder in einem externen Speicher abgelegt sind und zur Abarbeitung sicherheitsrelevanter Anwendungen genutzt werden, überprüft werden.

Da bedingt ausführbare Sprungbefehle den Programmablauf in einer Recheneinheit, vorzugsweise einem Rechnerkern, beeinflussen können, ist der Befehlsstrom am Ausgang des Programmspeichers nicht immer deterministisch. Dies bedeutet, dass keine eindeutige Beziehung zwischen Eingabe- und Ausgabedaten besteht. So werden bestimmte Befehlsadressen des Programmspeichers immer angesprochen, andere nur in einem bestimmten Modus. Deshalb kann der Programmcode nicht durch einen effizienten datenblock- oder datenstrombasierten Überprüfungsmechanismus verifiziert werden.

Der Erfindung liegt somit die Aufgabe zugrunde, eine Anordnung anzugeben, welche die Überprüfung der Befehlsadressen des kompletten Programmspeichers erlaubt.

Der Vorteil der Erfindung besteht darin, dass das externe Überprüfungsmodul in einer vorher festgelegten, bekannten Reihenfolge den gesamten Inhalt des Programmspeichers mit einem Fehlerdetektionsverfahren überprüfen kann. Dabei enthält der Befehlszähler einen den Befehlsadressraum des Programmspeichers unabhängig vom Programmcode während des Normalbetriebes durchlaufenden Zusatzzähler, welcher mit dem Register verbunden ist. Die vorgeschlagene Struktur ermöglicht auf effiziente Weise eine Überwachung des gesamten Inhaltes des Programmspeichers während des Normalbetriebs. Je nach Bedarf kann die Überwachung auch periodisch erfolgen. Die Zeiträume, in welchen die Überprüfungen erfolgen sollen, können beliebig variiert werden. Die Erfindung kann mit den unterschiedlichsten Fehlerdetektionsverfahren arbeiten.

Es werden alle Befehlsadressen des Programmspeichers überprüft, auch solche, die im normalen Programmablauf nur in bestimmten Modi angesprochen und ansonsten übersprungen werden.

Da einige in einem Rechnerkern bereits vorhandene Strukturen, wie beispielsweise Adressdecoder und Ausgangstreiber des Speichers wiederverwendet werden, werden auch diese indirekt auf Fehler getestet.

Vorteilhafterweise weist der Zusatzzähler einen zweiten, die Daten zwischen einem Zwischenspeicher und dem Register austauschenden Umschalter auf, welcher über den Zwischenspeicher mit dem Register verbunden ist. Durch die bloße Erweiterung des Befehlszählers wird der hardwaremäßige Aufwand an Chipfläche somit auf ein Minimum reduziert, da schon vorhandene Teile des Befehlszählers auch für den Zusatzzähler Verwendung finden.

In einer Weiterbildung der Erfindung ist zur Überprüfung des Programmspeichers der dem aktuellen Programmablauf entsprechende Inhalt des Registers von dem zweiten Umschalter in den Zwischenspeicher ladbar, wobei das Register mit der zu überprüfenden Befehlsadresse überschreibbar ist. Durch den Wechsel der Inhalte von Register und Zwischenspeicher ist es einfach möglich den normalen Programmablauf zu unterbrechen und den Überprüfungsmodus zu starten. Der während des normalen Programmablaufs erreichte aktuelle Wert des Registers wird dabei zwischengespeichert. Damit wird bei der Überprüfung zwar der Programmablauf unterbrochen, jedoch nicht geändert.

In einer Ausgestaltung ist nach Ablauf der Überprüfung der dem aktuellem Programmablauf entsprechende Inhalt aus dem Zwischenspeicher in das Register rückübertragbar.
Durch das Zurückladen des zwischengespeicherten Wertes des normalen Programmablaufs in das Register wird das Programm an der Stelle fortgesetzt, an welcher es unterbrochen wurde.

In einer Weiterbildung führt das Register an einen nach Ablauf der Überprüfung die zu überprüfende Befehlsadresse um einen vorgegebenen Wert erhöhenden Addierer, welcher mit dem zweiten Umschalter verbunden ist, der die um einen vorgegebenen Wert erhöhte Befehlsadresse im Zwischenspeicher ablegt. Das hat den Vorteil, dass parallel zu der Überschreibung des Registers mit dem aktuellen Wert des normalen Programmablaufes durch den Addierer die nächste gewünschte zu überprüfende Befehlsadresse angewählt wird, die im Zwischenspeicher abgelegt wird. Der vom Addierer gewählte Wert kann dabei linear oder nach einer vorgegebenen anderen Vorschrift ausgewählt sein.

Erfolgt dann der nächste Befehl zum Start der weiteren Überprüfung wird wie bereits beschrieben, der normale Programmablauf unterbrochen und die nächste zu überprüfende Befehlsadresse des Programmspeichers aus dem Zwischenspeicher in das Register geladen.
Der Addierer stellt dabei ein Element der Anordnung dar, welches sowohl bei der Abarbeitung des normalen Programmcodes als auch im Überprüfungsmodus für die Befehlsadressen des Programmspeichers genutzt wird.

Vorteilhafterweise erlaubt der erweiterte Befehlszähler den vorher beschriebenen Ablauf im Zeitmultiplexverfahren. Da die Struktur im Zeitmultiplexverfahren arbeitet, kann ein einfaches und kostengünstiges Speichermodul wie beispielsweise ein "single-Port" Speichermodul eingesetzt werden. Ein solches Speichermodul besitzt nur einen Adresseingang und einen Datenausgang, was für den beschriebenen Vorgang ausreichend ist, da die normale Abarbeitung des Programmcodes und die Überprüfung zeitlich hintereinander durchgeführt werden.

In einer Ausgestaltung ist der Befehlszähler zur Übermittlung der zu überprüfenden Befehlsadresse mit dem externen Überprüfungsmodul über eine Signalleitung verbunden. Besonders vorteilhaft eignet sich die erfindungsgemäße Struktur somit für Rechnerarchitekturen, bei denen der Programmspeicher nicht mit einem Datenbus verbunden ist, da eine einfache Signalleitung zur Kommunikation zwischen Befehlszähler und Überprüfungsmodul ausreicht.

Um den Ablauf einer kompletten Überprüfung des Programmspeichers zu kontrollieren, detektiert das externe Überprüfungsmodul Beginn und Ende der Überprüfung des Programmspeichers. Dies erfolgt durch einen Vergleich der anliegenden Befehlsadresse mit einem im Überprüfungsmodul abgelegten Wert.

Wenn die Größe des Programmspeichers keine Zweierpotenz ist, muss nach einer kompletten Überprüfung das Zwischenregister wieder auf einen Anfangswert initialisiert werden. Zu diesem Zweck ist die Signalleitung zwischen dem externen Überprüfungsmodul und dem Befehlszähler bidirektional ausgebildet.

Alternativ detektiert der Befehlszähler Beginn und Ende der Überprüfung des Programmspeichers. Start und Ende der kompletten Überprüfung des Programmspeichers werden dann dem Überprüfungsmodul über eine Signalleitung mitgeteilt. Die Überprüfung der Befehlsadresse im externen Überprüfungsmodul entfällt. Somit kann vorteilhafterweise Chipfläche gespart werden.

In einer Weiterbildung der Erfindung ist der Befehlszähler mit einem die Speicherüberprüfung steuernden Befehlsdecoder verbunden. Die Steuerung der Überprüfung eines Adressinhaltes (Speicherplatzes) der Programmspeicherüberprüfung wird durch einen speziellen Softwarebefehl gestartet und verläuft automatisch unter der Kontrolle des Befehlsdecoders. Dadurch wird es auf einfache Art möglich, die Dauer für eine vollständige Überprüfung des Programmspeicherinhaltes variabel zu halten.
Die Differenzierung der Zeitdauer kann von den sicherheitsrelevanten Anforderungen der konkreten Applikation abhängig sein.
Bei einer anderen Betrachtung kann es in einer Initialisierungsphase notwendig sein, dass die Überprüfung des Programmspeichers in nur wenigen Millisekunden erfolgen muss, um sicher zu sein, dass die zu startende Anwendung auch zuverlässig arbeitet. In dieser Situation wird der Softwarebefehl zum Start der Überprüfung des Programmspeichers häufig wiederholt. Nach Abschluss der Initialisierungsphase reicht es aus, wenn die Überprüfung nur im Rahmen von mehreren Sekunden erfolgt. Dieses Vorgehen kann sich dann an der Prozessorauslastung orientieren. Zum anderen kann es sich auch danach richten, den Stromverbrauch so gering wie möglich zu halten.

Die Erfindung lässt zahlreiche Ausführungsformen zu. Eine davon soll anhand der in der Zeichnung dargestellten Figuren näher erläutert werden.

Im Stand der Technik DE 2906117 wird eine Schaltungsanordnung zum Prüfen des Programmablaufs in einem Mikroprozessorsteuerwerk offenbart. Hierzu kann ein Programmablauf über Stoppbedingungen unterbrochen werden.

Es zeigt:
- Figur 1:: Befehlszähler nach dem Stand der Technik
- Figur 2:: ein erfindungsgemäßes Ausführungsbeispiel des Befehlszählers
- Figur 3:: Systemansicht mit einer erfindungsgemäßen Anordnung

Gleiche Merkmale sind mit gleichen Bezugszeichen gekennzeichnet.

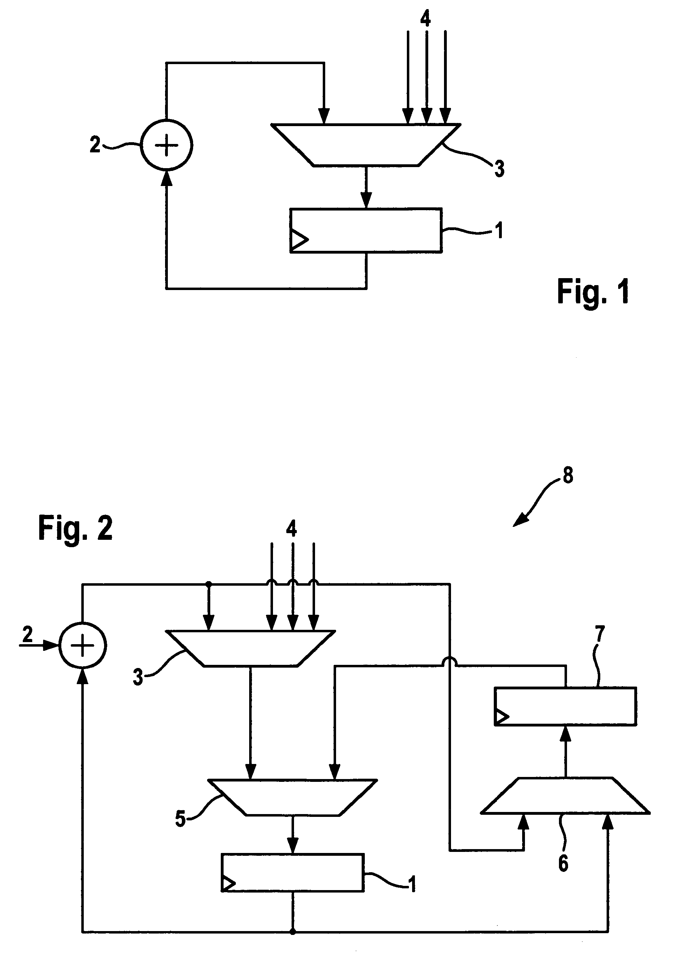

In Figur 1 ist ein Befehlszähler dargestellt, wie er nach dem Stand der Technik in einem Rechnerkern bekannt ist. Der Befehlszähler besteht aus einem Register 1 mit der Wortbreite N. Der Inhalt des Registers 1 dient als Adresse im Programmspeicher. Das Register 1 ist mit einem Addierer 2 verbunden, der den Inhalt des Registers 1 nach jedem Befehl um eins erhöht.
Der Addierer 2 und ein in der Figur 1 nicht weiter dargestelltes externes Befehlsdecodermodul führen an einen ersten Multiplexer 3, welcher wiederum mit dem Register 1 verbunden ist. Um den Programmablauf steuern zu können, wird der um eins durch den Addierer 2 erhöhte Registerinhalt über den ersten Multiplexer 3 wieder dem Register 1 zugeführt. Der Registerinhalt kann auch von außen von dem externen Befehlsdekodermodul gesetzt werden, was durch die Eingänge 4 am ersten Multiplexer 3 dargestellt ist. Auch diese Steuerung erfolgt über den ersten Multiplexer 3.

Um den Programmspeicher überprüfen zu können, muss der komplette Adressraum einmal durchlaufen werden. Da der Programmablauf durch von außen bedingte Sprungbefehle beeinflusst werden kann, wird ein Zusatzzähler eingesetzt, der den Adressraum unabhängig vom Programmcode des zu überprüfenden Programmspeichers nach einer linearen oder einer anderen vorzugebenden Vorschrift durchläuft. Zur Realisierung des Zusatzzählers wird der nach dem Stand der Technik bekannte Befehlszähler erweitert, so dass einige schon vorhandene Hardwareelemente mit benutzt werden können.

Der erweiterte Befehlszähler ist in Figur 2 dargestellt. Das Register 1 ist einerseits über den Addierer 2 mit dem ersten Multiplexer 3 verbunden, welcher über einen zweiten Multiplexer 5 zurück an das Register 1 führt. Andererseits ist das Register 1 mit einem dritten Multiplexer 6 verbunden, welcher an einen Zwischenspeicher 7 führt. Der Zwischenspeicher 7 ist wiederum über den zweiten Multiplexer 5 an das Register 1 geführt. Der Addierer 2 ist zusätzlich mit dem dritten Multiplexer 6 verbunden.

Auch bei dieser Anordnung ist es möglich, dass der Registerinhalt von einem externen Befehlsdecodermodul, gekennzeichnet durch die Eingänge 4 am ersten Multiplexer 3, über den ersten Multiplexer 3 und den zweiten Multiplexer 5 gesetzt werden kann.

Bei dem ersten Multiplexer 3 und dem dritten Multiplexer 6 werden vorzugsweise zwei N-Bit 2-zu-1 Multiplexer verwandt.

Die Überprüfung eines Befehls des Programmspeichers umfasst dabei typischerweise drei Zyklen:
Zunächst wird der Befehl zum Starten der Überprüfung einer Speicheradresse des Programmspeichers dekodiert. Dieser Befehl ist in der Software des normalen Programmcodes enthalten und wird somit während des Normalbetriebes der Recheneinheit gelesen.

Nach der Dekodierung dieses Befehles wird der normale Programmbetrieb gestoppt. Der Inhalt des Registers 1, welcher eine Speicheradresse des aktuell ablaufenden Programms enthält, wird über den dritten Multiplexer 6 in den Zwischenspeicher 7 geladen. Somit bleibt der aktuelle Stand des Programmablaufes gespeichert.
Gleichzeitig wird der Inhalt des Zwischenspeichers 7, welcher der zu prüfenden Speicheradresse des Programmspeichers entspricht, in das Register 1 geladen.

In einem nächsten Schritt wird der durch den Addierer 2 um eins erhöhte Inhalt des Registers 1 über den dritten Multiplexer 6 wieder in den Zwischenspeicher 7 abgelegt. Gleichzeitig wird der Inhalt des Zwischenspeichers 7 über den zweiten Multiplexer 5 in das Register 1 geladen. Da dieser Inhalt der Speicheradresse des Befehlscodes entspricht, an welcher Stelle das aktuell laufende Programm unterbrochen wurde, kann der normale Programmablauf nun wieder fortgesetzt werden.

Der wieder in den Zwischenspeicher 7 geladene um eins erhöhte Inhalt des Registers 1 entspricht nun der nächsten Speicheradresse des zu überprüfenden Programmspeichers, welcher beim nächsten Befehl zum Starten der Überprüfung einer Speicheradresse überprüft wird. Nach dieser Vorgehensweise wechselt der erweiterte Befehlszähler 8 zwischen Normalbetrieb und Programmspeicherüberprüfungsmodus hin und her.

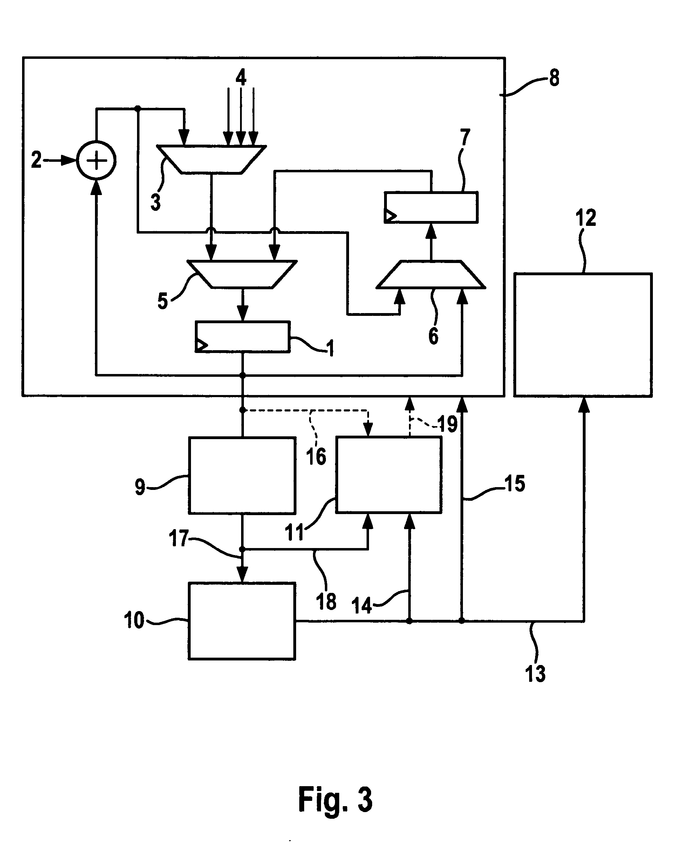

Eine Systemansicht mit dem erläuterten erweiterten Befehlszähler 8 ist aus Figur 3 ersichtlich. Der zu prüfende Programmspeicher 9 ist mit einem Befehlsdecoder 10 und dem externen Überwachungsmodul 11 verbunden. Der Befehlsdecoder 10 wiederum führt direkt an das externe Überwachungsmodul 11 und den erweiterten Befehlszähler 8. Darüber hinaus ist der Befehlsdecoder 10 mit weiteren Modulen 12, wie beispielsweise den Speichereinheiten RAM und ROM oder der arithmetisch - logischen Einheit (ALU) eines Prozessors verbunden, an welchen er über die Signalleitung 13 Steuersignale ausgibt.

Zunächst befindet sich das System in der Abarbeitung eines normalen Programms, welches durch einen Programmcode vorgegeben wird, der im Programmspeicher abgelegt ist. Wird im Programmcode als nächster Befehl der Befehl zum Starten der Überprüfung einer Speicheradresse des Programmspeichers 9 aufgerufen, wird dies vom Befehlsdecoder 10 dekodiert. Über die Signalleitung 14 gibt der Befehlsdecoder 10 diese Information an das Überprüfungsmodul 11 weiter. Darüber hinaus wird über die Signalleitung 15 auch der erweiterte Befehlszähler 8 informiert. Der Programmablauf wird von dem erweiterten Befehlszähler 8 unterbrochen. Der erweiterte Befehlszähler 8 arbeitet in der beschriebenen Art und Weise, indem er die Inhalte zwischen Register 1 und Zwischenspeicher 7 austauscht. Die zu überprüfende Speicheradresse im Register 1 wird dem externen Oberprüfungsmodul 11 über die Signalleitung 16 mitgeteilt. Die zu überprüfende Speicheradresse kann dabei auch zusätzlich zum Programmspeicherinhalt als zu prüfender Wert eingesetzt werden. Darüber hinaus wird der Programmspeicher 9 aufgefordert, den zu dieser Speicheradresse zugehörigen Befehl aufzurufen. Über die Signalleitung 17 wird der Befehl an den Befehlsdecoder 10 und über die Signalleitung 18 an das Oberprüfungsmodul 11 weitergegeben. Das Oberprüfungsmodul 11 übernimmt den zu diesem Zeitpunkt anliegenden, zu überprüfenden Befehl und vergleicht ihn mittels eines Fehlerdetektionsprogramms. Ist der Befehl nicht selbst auf einen Fehler überprüfbar, sondern nur der gesamte Speicher oder Speicherbereiche, wird der Speicher kontrolliert. Eine gängige Prüfungsmethode ist die Bildung einer Prüfsumme über den gesamten Speicher.

Ist diese Überprüfung abgeschlossen und wurden die Inhalte von Register 1 und Zwischenspeicher 7 abermals ausgetauscht, so dass nun wieder der dem Normalprogramm entsprechende Speicherinhalt im Register 1 vorliegt, wird der normale Programmablauf wieder aufgenommen.

Dieser Vorgang kann jederzeit wiederholt werden, indem er durch einen weiteren Befehl zum Starten der Überprüfung einer Befehlsadresse des Programmspeichers 9 wieder aufgerufen wird. Auf diese Art und Weise wird der Vorgang so häufig wiederholt, bis der komplette Adressraum des Programmspeichers 9 durchlaufen und alle Speicherplätze untersucht wurden. Das Ergebnis der Verifikation wird anschließend von dem Befehlsdecoder 10 an ein übergeordnetes, nicht weiter dargestelltes Steuergerät weitergeleitet und dort ausgewertet.

Die Feststellung von Start und Ende einer kompletten Überprüfung des Programmspeichers 9 findet im externen Überprüfungsmodul 11 statt. Hierzu vergleicht das externe Oberprüfungsmodul 11 die anliegende Speicheradresse mit einem im Überprüfungsmodul 11 abgelegten Wert. Dies passiert immer dann, wenn ein Überprüfungsvorgang aktiv ist. Dabei identifiziert ein erster Wert die erste Adresse des Programmspeichers 9, also den Anfang der Überprüfung, während ein zweiter Wert die letzte Adresse des Programmspeichers 9 und somit das Ende einer kompletten Überprüfung des Adressraumes des Programmspeichers 9 detektiert.

Wenn die Größe des Speichers eine Zweierpotenz darstellt, kann die Feststellung von Start und Ende einer kompletten Überprüfung des Programmspeichers komplett entfallen. Es tritt ein Überlauf auf, wenn der Wert des Zwischenspeichers das Ende des Adressraumes erreicht. Im nächsten Überprüfungszyklus wird der Wert des Zwischenspeichers durch diesen Überlauf automatisch auf Null initialisiert.

Wenn die Größe des Programmspeichers 9 keine Zweierpotenz darstellt, muss der Zwischenspeicher 7 nach einer kompletten Überprüfung des Adressraumes des Programmspeichers wieder auf einen Anfangswert initialisiert werden. Dies geschieht über die Signalleitung 19 vom Überprüfungsmodul 11 zum erweiterten Befehlszähler 8. Entspricht die Größe des Programmspeichers 9 einer Zweierpotenz, ist die Initialisierung des Zwischenspeichers 7 nicht notwendig und die Signalleitung kann entfallen.

Die beschriebene Lösung ist besonders geeignet für Auswerteschaltungen für Drehraten- und Beschleunigungssensoren.

## Patentansprüche

1. Verfahren zur Überprüfung eines Programmspeichers (9) einer Recheneinheit durch ein Überprüfungsmodul (11) **gekennzeichnet durch** die folgenden Schritte:
- ein Befehl zum Starten der Überprüfung des Programmspeichers wird während eines Normalbetriebs der Recheneinheit gelesen und **durch** einen Befehlsdecoder (10) der Recheneinheit decodiert, wobei der Befehl in einem während des Normalbetrieb ablaufenden Programm enthalten ist,
- nach der Decodierung des Befehls zum Starten der Überprüfung wird der Normalbetrieb der Recheneinheit gestoppt,
- ein Inhalt eines Registers (1) welcher eine Speicheradresse des ablaufenden Programms enthält, wird in einen Zwischenspeicher (7) geladen und gleichzeitig ein Inhalt des Zwischenspeichers (7) welcher einer zu überprüfenden Speicheradresse des Programmspeichers (9) entspricht, wird in das Register (1) geladen,
- die zu überprüfende Speicheradresse wird von dem Register (1) an das Überprüfungsmodul (11) mitgeteilt,
- ein zu der überprüfenden Speicheradresse zugehöriger, zu überprüfender Befehl wird von dem Programmspeicher (9) an das Überprüfungsmodul (11) weitergegeben,
- der Inhalt des Registers (1) wird **durch** einen Addierer (2) um einen vorgegebenen Wert erhöht und in den Zwischenspeicher (7) abgelegt, und der inhalt des Zwischenspeichers (7) wird in das Register (11) geladen,
- der Normalbetrieb der Recheneinheit wird wieder aufgenommen.

2. Verfahren nach Anspruch 1, **dadurch gekennzeichnet, dass** der zu überprüfende Befehl oder Speicherbereiche des Programmspeichers oder der gesamte Programmspeicher durch das Überprüfungsmodul überprüft werden.

3. Verfahren nach einem der vorangegangenen Ansprüche, **dadurch gekennzeichnet, dass** Beginn und Ende der Überprüfung des Programmspeichers durch das Überprüfungsmodul detektiert werden.

4. Schaltungsanordnung zur Überprüfung eines Programmspeichers einer Recheneinheit mit mindestens einem Register und mindestens einem Zwischenspeicher sowie mit Mitteln
- einen Befehl zum Starten der Überprüfung des Programmspeichers während eines Normalbetriebs der Recheneinheit zu lesen und zur Decodierung an einen Befehlsdecoder der Recheneinheit zu senden, wobei der Befehl in einem während des Normalbetrieb ablaufenden Programm enthalten ist,
- nach der Decodierung des Befehls zum Starten der Überprüfung den Normalbetrieb der Recheneinheit zu stoppen,
- einen Inhalt des Registers, welcher eine Speicheradresse des ablaufenden Programms enthält, in den Zwischenspeicher zu laden und gleichzeitig einen Inhalt des Zwischenspeichers, welcher einer zu überprüfenden Speicheradresse des Programmspeichers entspricht, in das Register zu laden,
- die zu überprüfende Speicheradresse von dem Register an das Überprüfungsmodul mitzuteilen,
- einen zu der überprüfenden Speicheradresse zugehörigen, zu überprüfenden Befehl von dem Programmspeicher an das Überprüfungsmodul weiterzugeben,
- den Inhalt des Registers durch einen Addierer um einen vorgegebenen Wert zu erhöhen und in den Zwischenspeicher abzulegen, und den Inhalt des Zwischenspeichers in das Register zu laden,
- den Normalbetrieb der Recheneinheit wieder aufzunehmen.

5. Schaltungsanordnung nach Anspruch 4 mit einem ersten Multiplexer, über welchen der Inhalt des Registers, welcher die Speicheradresse des ablaufenden Programms enthält, in den Zwischenspeicher geladen wird, und einem zweiten Multiplexer, über welchen der Inhalt des Zwischenspeichers, welcher der zu überprüfenden Speicheradresse des Programmspeichers entspricht, in das Register geladen wird.

6. Schaltungsanordnung nach Anspruch 4 mit einem ersten Multiplexer, über welchen der durch den Addierer erhöhte Inhalt des Registers in den Zwischenspeicher abgelegt wird, und einem zweiten Multiplexer, über welchen der Inhalt des Zwischenspeichers in das Register geladen wird.

## Claims

1. Method for checking a program memory (9) in a computation unit using a checking module (11), **characterized by** the following steps:
- a command for starting the check on the program memory is read during a normal mode of the computation unit and is decoded by a command decoder (10) in the computation unit, the command being contained in a program which is executed during the normal mode,
- the decoding of the command for starting the check is followed by the normal mode of the computation unit being stopped,
- a content of a register (1) which contains a memory address for the program being executed is loaded into a buffer store (7) and simultaneously a content of the buffer store (7), which corresponds to a memory address that is to be checked for the program memory (9), is loaded into the register (1),
- the memory address to be checked is communicated from the register (1) to the checking module (11),
- a command to be checked which is associated with the memory address to be checked is forwarded from the program memory (9) to the checking module (11),
- the content of the register (1) is incremented by a prescribed value by an adder (2) and is stored in the buffer store (7), and the content of the buffer store (7) is loaded into the register (1),
- the normal mode of the computation unit is resumed.

2. Method according to Claim 1, **characterized in that** the command to be checked or memory areas of the program memory or the entire program memory is/are checked by the checking module.

3. Method according to either of the preceding claims, **characterized in that** the start and end of the check on the program memory are detected by the checking module.

4. Circuit arrangement for checking a program memory in a computation unit having at least one register and at least one buffer store and also having means
- for reading a command for starting the check on the program memory during a normal mode of the computation unit and for sending said command to a command decoder in the computation unit for the purpose of decoding, the command being contained in a program which is executed during the normal mode,
- for following the decoding of the command for starting the check by stopping the normal mode of the computation unit,
- for loading a content of the register, which contains a memory address for the program being executed, into the buffer store and for simultaneously loading a content of the buffer store, which corresponds to a memory address that is to be checked for the program memory, into the register,
- for communicating the memory address to be checked from the register to the checking module,
- for forwarding a command to be checked which is associated with the memory address to be checked from the program memory to the checking module,
- for incrementing the content of the register by a prescribed value using an adder and for storing said content in the buffer store, and for loading the content of the buffer store into the register,
- for resuming the normal mode of the computation unit.

5. Circuit arrangement according to Claim 4, having a first multiplexer, which is used to load the content of the register, which contains the memory address of the program executed, into the buffer store, and a second multiplexer, which is used to load the content of the buffer store, which corresponds to the memory address that is to be checked for the program memory, into the register.

6. Circuit arrangement according to Claim 4, having a first multiplexer, which is used to store the register content incremented by the adder in the buffer store, and a second multiplexer, which is used to load the content of the buffer store into the register.

## Revendications

1. Procédé de contrôle d'une mémoire de programme (9) d'une unité de calcul par un module de contrôle (11), **caractérisé par** les étapes suivantes :
- une instruction de démarrage du contrôle de la mémoire de programme est lue pendant un fonctionnement normal de l'unité de calcul et décodée par un décodeur d'instruction (10) de l'unité de calcul, l'instruction étant contenue dans un programme qui se déroule pendant le fonctionnement normal,
- après le décodage de l'instruction de démarrage du contrôle, le fonctionnement normal de l'unité de calcul est stoppé,
- un contenu d'un registre (1) qui contient une adresse de mémoire du programme en cours d'exécution est chargé dans une mémoire intermédiaire (7) et, simultanément, un contenu de la mémoire intermédiaire (7) qui correspond à une adresse de mémoire à contrôler de la mémoire de programme (9) est chargé dans le registre (1),
- l'adresse de mémoire à contrôler est communiquée du registre (1) au module de contrôle (11),
- une instruction à contrôler, correspondant à l'adresse de mémoire à contrôler, est transmise de la mémoire de programme (9) au module de contrôle (11), le contenu du registre (1) est incrémenté d'une valeur prédéfinie par un additionneur (2) et déposé dans la mémoire intermédiaire (7) et le contenu de la mémoire intermédiaire (7) est chargé dans le registre (1),
- le fonctionnement normal de l'unité de calcul est repris.

2. Procédé selon la revendication 1, **caractérisé en ce que** l'instruction à contrôler ou les zones de mémoire de la mémoire de programme ou la totalité de la mémoire de programme sont contrôlées par le module de contrôle.

3. Procédé selon l'une des revendications précédentes, **caractérisé en ce que** le début et la fin du contrôle de la mémoire de programme sont détectés par le module de contrôle.

4. Arrangement de commutation pour contrôler une mémoire de programme d'une unité de calcul comprenant au moins un registre et au moins une mémoire intermédiaire et comprenant aussi des moyens
- pour lire une instruction de démarrage du contrôle de la mémoire de programme pendant un fonctionnement normal de l'unité de calcul et, en vue de la décoder, l'envoyer à un décodeur d'instruction de l'unité de calcul, l'instruction étant contenue dans un programme qui se déroule pendant le fonctionnement normal,
- après le décodage de l'instruction de démarrage du contrôle, pour stopper le fonctionnement normal de l'unité de calcul,
- pour charger un contenu du registre qui contient une adresse de mémoire du programme en cours d'exécution dans la mémoire intermédiaire et, simultanément, pour charger dans le registre un contenu de la mémoire intermédiaire qui correspond à une adresse de mémoire à contrôler de la mémoire de programme,
- pour communiquer l'adresse de mémoire à contrôler du registre au module de contrôle,
- pour transmettre une instruction à contrôler, correspondant à l'adresse de mémoire à contrôler, de la mémoire de programme au module de contrôle,
- pour incrémenter le contenu du registre d'une valeur prédéfinie par un additionneur et le déposer dans la mémoire intermédiaire, puis pour charger le contenu de la mémoire intermédiaire dans le registre,
- pour reprendre le fonctionnement normal de l'unité de calcul.

5. Arrangement de commutation selon la revendication 4, comprenant un premier multiplexeur par le biais duquel le contenu du registre, qui contient l'adresse de mémoire du programme en cours d'exécution, est chargé dans la mémoire intermédiaire et un deuxième multiplexeur par le biais duquel le contenu de la mémoire intermédiaire, qui correspond à l'adresse de mémoire à contrôler de la mémoire de programme, est chargé dans le registre.

6. Arrangement de commutation selon la revendication 4, comprenant un premier multiplexeur par le biais duquel le contenu du registre, incrémenté par l'additionneur, est déposé dans la mémoire intermédiaire, et un deuxième multiplexeur par le biais duquel le contenu de la mémoire intermédiaire est chargé dans le registre.
